# EUROPEAN PATENT APPLICATION

(11) **EP 4 714 825 A1**
(43) Date of publication of application: **25.03.2026**
(21) Application number: 24806696.1
(22) Date of filing: 19.06.2024
(51) Int. Cl.: B64D 1/06

(54) **DELIVERY UNMANNED AERIAL VEHICLE**

(30) Priority: 18.05.2023 CN 202321212071 U
(71) Applicant: Autoflight (Kunshan) Co., Ltd., Suzhou, Jiangsu 215345 (CN)
(72) Inventor: TIAN, Yu, Suzhou, Jiangsu 215345 (CN); DING, Yu, Suzhou, Jiangsu 215345 (CN)
(74) Representative: MERH-IP Matias Erny Reichl Hoffmann Patentanwälte PartG mbB
(86) International application number: PCT/CN2024/100034
(87) International publication number: WO 2024/235348

(57) **Abstract**

The invention relates to the field of firefighting technology, and discloses a delivery UAV. The delivery UAV of the invention comprises a UAV main body and a delivery device. The delivery device comprises a device body, a suspension and release mechanism, and at least one delivery unit. The device body is connectable to the UAV main body, and the device body is internally provided with at least one accommodation channel extending in a height direction. Each accommodation channel is configured to accommodate a corresponding delivery unit. The suspension and release mechanism is arranged at the top of the device body and connectable to each delivery unit respectively. The suspension and release mechanism is configured to release the delivery units individually so that the delivery units are delivered to the target delivery area. The delivery UAV of this invention can load multiple delivery units at one time, achieve modular installation and disassembly of the delivery device, improve delivery efficiency, and has a simple structure, accurate delivery, and low cost.

## Description

### FIELD OF THE DISCLOSURE

The invention relates to the field of firefighting technology, in particular to a delivery unmanned aerial vehicle.

### BACKGROUND OF THE INVENTION

In existing delivery bomb installation and aerial delivery processes, the installation structure for delivery bombs to an unmanned aerial vehicle (UAV) is often complex, and each process is time-consuming and labor-intensive, especially for heavy delivery bombs. In urban firefighting, buildings are dense; in forest firefighting, combustibles are abundant, and fires are generally large and develop rapidly. UAVs are mobile and flexible and can quickly reach the scene, but the number of delivery bombs a UAV can carry is limited. In a single fire, the UAV needs to make multiple trips to the fire scene carrying delivery bombs, and the time required for loading the UAV imposes stringent requirements. Therefore, the delivery bomb module needs to have the capability for rapid loading and delivery of delivery bombs.

### SUMMARY OF THE INVENTION

The purpose of the present invention is to provide a delivery UAV. The delivery UAV of the present invention can load multiple delivery units at one time, achieve modular installation and disassembly of the delivery device, improve delivery efficiency, and has a simple structure, accurate delivery, and low cost.

To solve the above technical problem, the present invention provides a delivery UAV, comprising: a UAV main body and a delivery device, wherein the delivery device comprises a device body, a suspension and release mechanism, and at least one delivery unit; the device body is connectable to the UAV main body and the device body is internally provided with at least one accommodation channel extending in a height direction, each accommodation channel is configured to accommodate a corresponding delivery unit, the suspension and release mechanism is arranged at the top of the device body and is respectively connectable to each delivery unit, the suspension and release mechanism is configured to release each delivery unit individually so that the respective delivery unit can be delivered to a target delivery area.

Preferably, further comprising a cargo compartment, the cargo compartment is connectable to the UAV main body and a bottom of the cargo compartment is provided with a delivery door, the device body is fixable inside the cargo compartment, the suspension and release mechanism is configured to release each delivery unit individually so that the respective delivery unit can be delivered to the target delivery area through the delivery door.

Preferably, the cargo compartment comprises a device fixing base, the device fixing base surrounds a loading area, the loading area is adapted to load the device body in order to restrict a movement of the device body within the cargo compartment.

Preferably, the device fixing base comprises a pair of inner fixing bases and a pair of outer fixing bases, each inner fixing base at least abuts two side surfaces of the device body, each outer fixing base at least abuts one side surface of the device body.

Preferably, a side of the cargo compartment is provided with a side door, the delivery device can enter the cargo compartment through the side door, the device fixing base is provided with a loading port on a side facing the side door, the delivery device can enter the loading area of the device fixing base through the loading port.

Preferably, the loading port is configured to be closable by a fixing member.

Preferably, each of the pair of outer fixing bases is provided with a fixing bracket, the fixing member is connectable to the fixing bracket to close the loading port.

Preferably, the fixing member is an elastic band.

Preferably, the accommodation channel is arranged facing the delivery door, and after release, the delivery unit can push open the delivery door by its own weight and be delivered to the target delivery area.

Preferably, the delivery door is connected to a door closer, the door closer is configured to automatically close the delivery door after it was pushed open by the delivery unit.

The delivery UAV of the present invention can load multiple delivery units at one time, achieve modular installation and disassembly of the delivery device, improve delivery efficiency, and has a simple structure, accurate delivery, and low cost.

### BRIEF DESCRIPTION OF DRAWINGS

FIG. 1 shows a schematic structural view of the delivery UAV according to an embodiment of the present invention;
FIG. 2 shows a schematic structural view of the cargo compartment with the delivery device according to an embodiment of the present invention;
FIG. 3 shows a schematic structural view of the delivery device fixed to the device fixing base according to an embodiment of the present invention;
FIG. 4 shows a schematic structural view of the suspension and release mechanism according to an embodiment of the present invention;
FIG. 5 shows a partially enlarged view of position A in FIG. 4;
FIG. 6 shows a schematic structural view of multiple delivery units according to an embodiment of the present invention;
FIG. 7 shows a partially enlarged view of position B in FIG. 6;
FIG. 8 shows a schematic structural view of the bottom of the cargo compartment according to an embodiment of the present invention;
FIG. 9 shows a schematic structural view of the cargo compartment without the delivery device according to an embodiment of the present invention;
FIG. 10 shows a schematic structural view of the device fixing base according to an embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

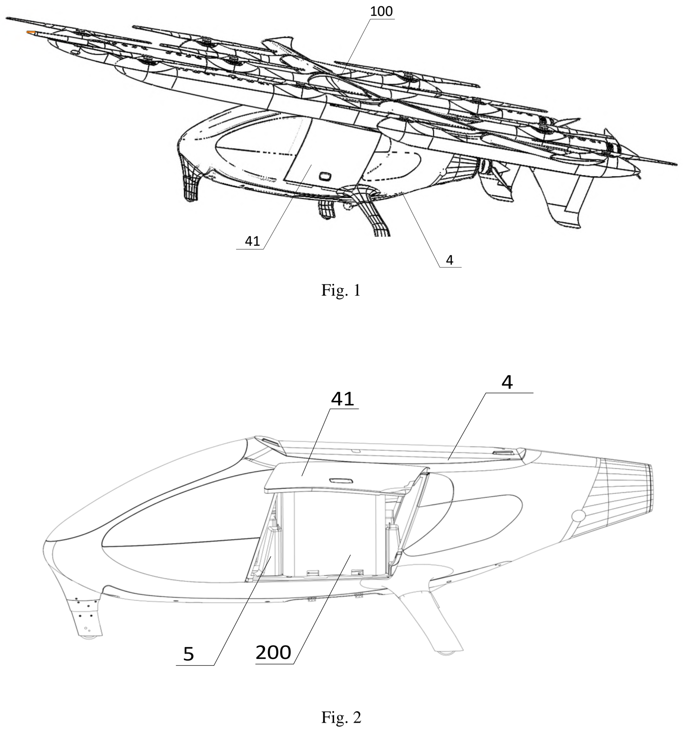

The embodiments of the present invention are described below with reference to the accompanying drawings. As shown in Figures 1 to 3, the delivery UAV comprises a UAV main body 100 and a delivery device 200. The delivery device 200 comprises a device body 1, a suspension and release mechanism 2, and four delivery units 3. The device body 1 is connectable to the UAV main body 100 and the device body 1 is internally provided with four accommodation channels 10 extending in a height direction. Each accommodation channel 10 is configured to accommodate a corresponding delivery unit 3. The suspension and release mechanism 2 is arranged at the top of the device body 1 and connectable to each delivery unit 3 respectively. The suspension and release mechanism 2 can release the delivery units 3 individually so that the delivery units 3 are delivered to the target delivery area.

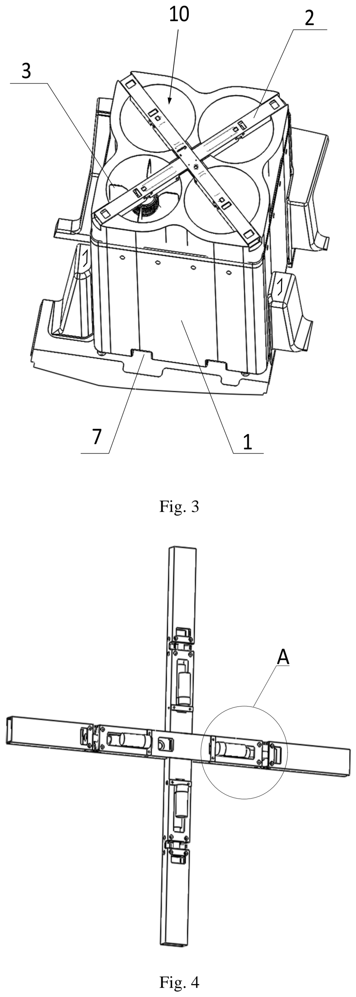

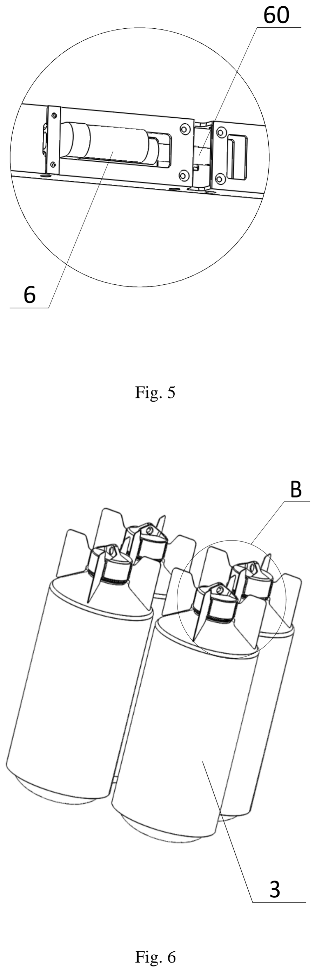

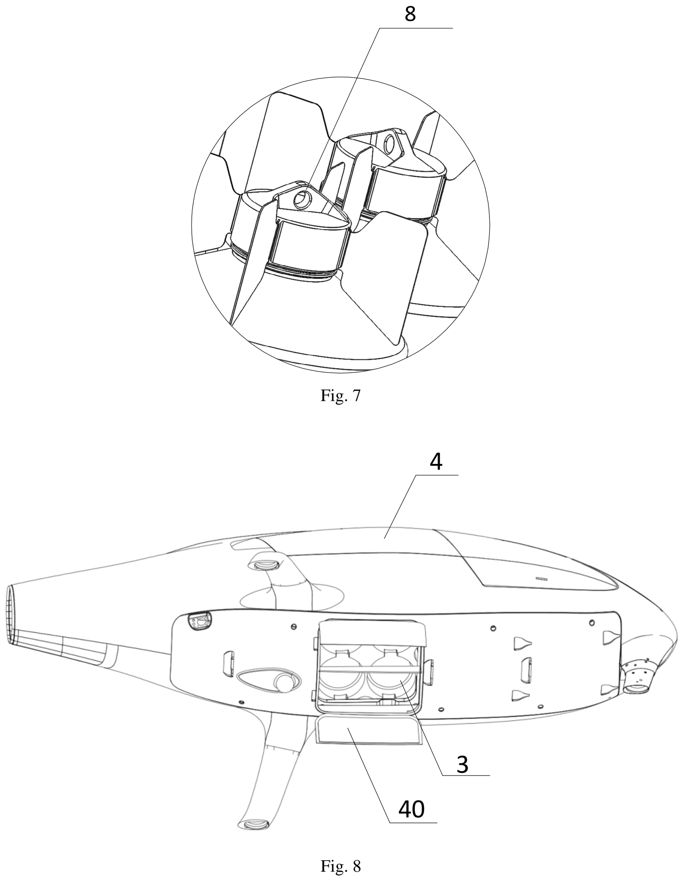

Specifically, the device body 1 is connectable to the bottom of the UAV main body 100. The device body 1 is internally provided with four accommodation channels 10 extending in the height direction and independent of each other. Each accommodation channel 10 is configured to accommodate a corresponding delivery unit 3. Each accommodation channel 10 has openings at both its upper and lower ends. The suspension and release mechanism 2 is located at the top of the device body 1. In this embodiment, as shown in Figures 4 and 5, the suspension and release mechanism 2 is cross-shaped. The four arms of the cross are respectively positioned above the four openings at the upper ends. Each arm of the suspension and release mechanism 2 internally contains an electric push rod device 6. Each electric push rod device 6 is correspondingly aligned with a delivery unit 3 in each accommodation channel 10. Each electric push rod device 6 comprises a telescopic push rod 60. As shown in Figures 6 and 7, the top of the delivery unit 3 is provided with a lifting ring 8. Each electric push rod device 6 can extend the telescopic push rod 60 to connect with the lifting ring 8 of the corresponding delivery unit 3, or retract the telescopic push rod 60 to disconnect from the lifting ring 8 of the delivery unit 3, thereby releasing the delivery units 3 individually to deliver them to the target delivery area. This method is convenient, fast, highly reliable, and allows the delivery units to be vertically lowered directly from above, resulting in higher delivery accuracy. In this embodiment, a cross-shaped lifting beam structure is adopted, which better achieves force balance. In this embodiment, each accommodation channel 10 is not interconnected with the others. Therefore, the four delivery units 3 are independently stored in their respective accommodation channel 10 of the device body 1, effectively preventing tipping and mutual collisions. In this embodiment, the device body 1 may also be connected to other parts of the UAV main body 100 and is not limited to the bottom of the UAV main body 100. Optionally, the device body 1 is detachably connected to the UAV main body 100. The delivery UAV of the present invention can load multiple delivery units at one time, enabling modular installation and disassembly of the delivery device, improving delivery efficiency, with a simple structure, accurate delivery, and low cost. In addition, the four delivery units 3 are controlled by independent electric push rod devices 6, which allows for simultaneous delivery or separate delivery.

The delivery unit 3 can be either a fire extinguishing bomb or rescue supplies, and is not specifically limited here. In this embodiment, the number of delivery units 3 is four, but it can be understood that the number of accommodation channels 10 and corresponding delivery units 3 in this embodiment is only an example.

In the above embodiments, the delivery device 200 can be directly attachable to the bottom of the UAV main body 100. In some embodiments, as shown in Figures 1 and 8, the delivery UAV comprises a cargo compartment 4. The cargo compartment 4 is connectable to the bottom of the UAV main body 100, and the bottom of the cargo compartment 4 is provided with a delivery door 40. The device body 1 is installed inside the cargo compartment 4, and the suspension and release mechanism 2 can release the delivery units 3 respectively to allow the delivery units 3 to be delivered through the delivery door 40 to the target delivery area.

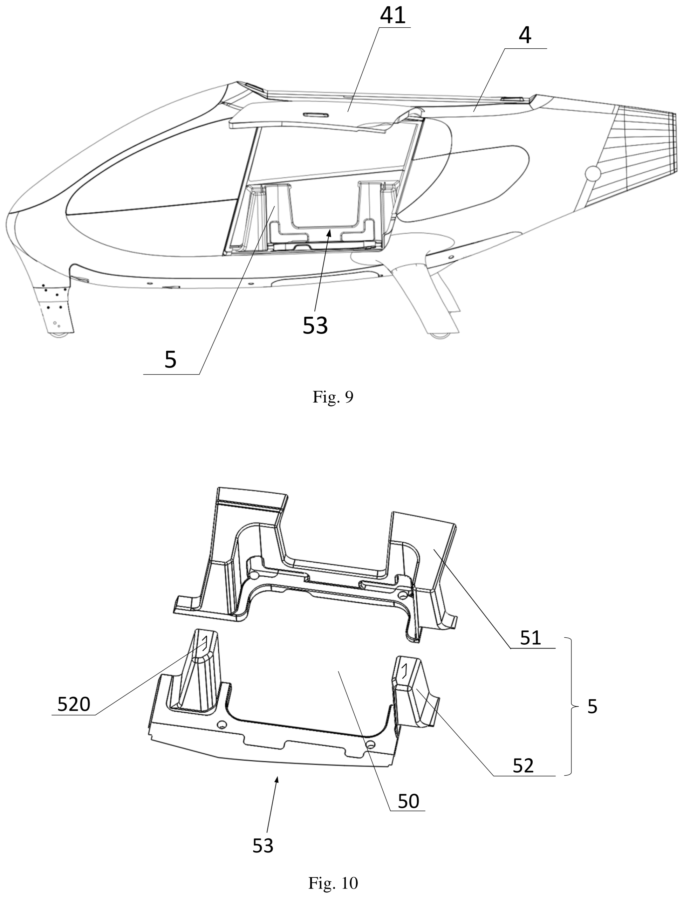

Specifically, as shown in Figures 9 and 10, the cargo compartment 4 comprises a device fixing base 5. The device fixing base 5 surrounds a loading area 50, which is adapted to load the delivery device 200 in order to restrict the movement of the device body 1 within the cargo compartment 4. The device fixing base 5 comprises a pair of inner fixing bases 51 and a pair of outer fixing bases 52. The inner fixing bases 51 abut against two sides of the device body 1, and the outer fixing bases abut against one side of the device body 1. However, it can be understood that the pair of inner fixing bases 51 may be connected to each other or may not be connected to each other. The pair of outer fixing bases 52 may also be connected to each other or may not be connected to each other. The inner fixing bases 51 may abut against more than two sides of the device body 1. The outer fixing bases 52 may abut against more than one side of the device body 1.

As shown in Figures 9 and 10, the side of the cargo compartment 4 is provided with a side door 41, and the device fixing base 5 is provided with a loading port 53 on the side facing the side door 41. The delivery device 200 can enter the cargo compartment 4 through the side door 41, then enter the loading area 50 of the device fixing base 5 through the loading port 53, and can be clamped in the device fixing base 5, thereby having its movement restricted. Furthermore, the loading port 53 can be closed by a fixing member to prevent the delivery device 200 from being disengaged through the loading port 53. In this embodiment, the fixing member is an elastic strap. Each of the pair of outer fixing bases 52 is provided with a fixing bracket 520, and both ends of an elastic strap can be connected to the fixing brackets 520, thereby closing the loading port 53. However, it can be understood that the elastic strap does not need to completely seal the loading port 53 but only needs to prevent the delivery device 200 from being disengaged through the loading port 53.

Furthermore, as shown in FIG. 3, the bottom of the opposite side walls of the device body 1 is provided with a pair of grooves 7. The grooves 7 extend from the bottom and connect the two opposite side surfaces. When loading the delivery device 200 into the cargo compartment of the delivery UAV, a pair of forks from a forklift can pass through the grooves 7 to lift the delivery device 200 and load it into the loading area 50 of the device fixing base 5 in the cargo compartment.

After the delivery device 200 is loaded into the loading area 50 of the device fixing base 5, the opening at the lower end of the accommodation channel 10 is arranged facing the delivery door 40. After release, the delivery unit 3 can push open the delivery door 40 by its own weight and be delivered to the target delivery area. Optionally, the delivery door 40 is connected to a door closer. The door closer can automatically close the delivery door 40 after it was pushed open by the delivery unit 3.

Furthermore, the device body 1 can be made of low-density foam with a glass fiber cloth outer layer, achieving lightweight characteristics that are beneficial for the lightweight design of aircraft. After lightweight optimization, the total weight of all delivery units can reach 400 kg, giving this delivery UAV significantly greater payload capacity compared to existing models.

The delivery UAV of the present invention can load multiple delivery units at one time, achieve modular installation and disassembly of the delivery device, improve delivery efficiency, and has a simple structure, accurate delivery, and low cost.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. A delivery unmanned aerial vehicle, comprising:
a UAV main body (100) and a delivery device (200), wherein the delivery device (200) comprises a device body (1), a suspension and release mechanism (2), and at least one delivery unit (3); the device body (1) is connectable to the UAV main body (100) and the device body (1) is internally provided with at least one accommodation channel (10) extending in a height direction, each accommodation channel (10) is configured to accommodate a corresponding delivery unit (3), the suspension and release mechanism (2) is arranged at the top of the device body (1) and is respectively connectable to each delivery unit (3), the suspension and release mechanism (2) is configured to release each delivery unit (3) individually so that the respective delivery unit (3) can be delivered to a target delivery area.

2. The delivery unmanned aerial vehicle according to claim 1, further comprising a cargo compartment (4), the cargo compartment (4) is connectable to the UAV main body (100) and a bottom of the cargo compartment (4) is provided with a delivery door (40), the device body (1) is fixable inside the cargo compartment (4), the suspension and release mechanism (2) is configured to release each delivery unit (3) individually so that the respective delivery unit (3) can be delivered to the target delivery area through the delivery door (40).

3. The delivery unmanned aerial vehicle according to claim 2, wherein the cargo compartment (4) comprises a device fixing base (5), the device fixing base (5) surrounds a loading area (50), the loading area (50) is adapted to load the device body (1) in order to restrict a movement of the device body (1) within the cargo compartment (4).

4. The delivery unmanned aerial vehicle according to claim 3, wherein the device fixing base (5) comprises a pair of inner fixing bases (51) and a pair of outer fixing bases (52), each inner fixing base (51) at least abuts two side surfaces of the device body (1), each outer fixing base at least abuts one side surface of the device body (1).

5. The delivery unmanned aerial vehicle according to claim 4, wherein a side of the cargo compartment (4) is provided with a side door (41), the delivery device (200) can enter the cargo compartment (4) through the side door (41), the device fixing base (5) is provided with a loading port (53) on a side facing the side door (41), the delivery device (200) can enter the loading area (50) of the device fixing base (5) through the loading port (53).

6. The delivery unmanned aerial vehicle according to claim 5, wherein the loading port (53) is configured to be closable by a fixing member.

7. The delivery unmanned aerial vehicle according to claim 6, wherein each of the pair of outer fixing bases (52) is provided with a fixing bracket (520), the fixing member is connectable to the fixing bracket (520) to close the loading port (53).

8. The delivery unmanned aerial vehicle according to claim 6, wherein the fixing member is an elastic band.

9. The delivery unmanned aerial vehicle according to claim 2, wherein the accommodation channel (10) is arranged facing the delivery door (40), and after release, the delivery unit (3) can push open the delivery door (40) by its own weight and be delivered to the target delivery area.

10. The delivery unmanned aerial vehicle according to claim 2, wherein the delivery door (40) is connected to a door closer, the door closer is configured to automatically close the delivery door (40) after it was pushed open by the delivery unit (3).
